# FASCICULE DE BREVET EUROPEEN

(11) **EP 0 742 137 B1**
(45) Date de publication et mention de la délivrance du brevet: **15.07.1998**
(21) Numéro de dépôt: 96107146.1
(22) Date de dépôt: 07.05.1996
(51) Int. Cl.: B62J 15/02

(54) **Dispositif pour la fixation d'un garde-boue de bicyclette**
Befestigungsvorrichtung für ein Fahrradschutzblech
Attachment means for a bicycle mudguard

(30) Priorité: 11.05.1995 IT VI950076
(43) Date de publication de la demande: 13.11.1996
(73) Titulaire: San Giorgio s.n.c. di De Poli Livia & C., 35014 Fontaniva (Padova) (IT)
(72) Inventeur: De Poli, Gavino, 35014 Fontaniva (Padova) (IT); Zugno, Stefano, 35010 San Pietro In Gu' (Padova) (IT)
(74) Mandataire: Petraz, Gilberto Luigi

(56) Documents cités:
- GB-A- 989 287
- GB-A- 2 153 314
- GB-A- 2 278 323

## Description

La présente invention est relative à un dispositif perfectionné pour la fixation d'un garde-boue de bicyclette aux tiges de support qui sont usuellement solidaires de la fourche du cadre ou bien du moyeu de la roue associée audit garde-boue.

Le document GB-A-2.278.323 décrit un système de fixation des tiges métalliques au garde-boue d'une bicyclette selon le préambule de la revendication 1.

La fixation est obtenue en utilisant, pour chaque tige ou pour une paire de tiges parallèles, un élément de support métallique ou en matériau plastique, qui est fixé au garde-boue au moyen de rivets ou d'autres moyens mécaniques placés en correspondance du bord extérieur dudit garde-boue.

L'élément de support, qui est constitué de deux parties distinctes, et qui engage la surface du garde-boue peut être conformé d'une façon telle qu'il en suit le profil.

Lesdits éléments de support sont avantageusement fabriqués en matériau plastique, ce qui permet l'insertion d'une vis autotaraudeuse, ce qui évite la nécessité de pourvoir un trou taraudé.

De plus, lesdites paires d'éléments peuvent être fixées aux tiges métalliques au moyen d'un système traditionnel à vis et écrou.

Néanmoins ce système, qui constitue l'état de la technique le plus proche à la présente invention, prévoit la fixation du garde-boue aux éléments de support au moyen de rivets, ce qui complique le montage général du garde-boue, et qui en élève le coût de production.

Le document GB-A-590.287 décrit un système de fixation d'un garde-boue de bicyclette aux tiges ancrées au moyeu de la roue, ledit système étant particulièrement adapté pour le support d'un garde-boue en plastique.

Ledit garde-boue présente un bord de renforcement pour augmenter la rigidité du garde-boue et pour obtenir des surfaces aplaties dotées de lumières en forme d'oeillets.

De plus, des deux côtés de chaque lumière on prévoit des rondelles pour le passage d'une vis.

Ladite vis est dotée d'une rainure s'étendant partiellement d'une extrémité à l'autre de cette vis, et ayant une largeur qui correspond au diamètre de la tige.

Pendant le montage l'extrémité de la tige est insérée dans cette rainure, puis elle est fixée au moyen d'un écrou vissé sur ladite vis.

La présente invention vise à pallier aux inconvénients et aux désavantages de l'état de la technique, et à fournir donc un dispositif perfectionné pour la fixation d'un garde-boue de bicyclette aux tiges de support respectivement reliées à la fourche ou bien au moyeu de la roue, ledit dispositif permettant un montage aisé et économique du garde-boue auxdites tiges.

Ceci est obtenu par un dispositif ayant les caractéristiques décrites à la revendication 1.

Le dispositif selon l'invention comprend un élément de support en matériau plastique comportant une rainure, à l'intérieur de laquelle est engagé le bord du garde-boue à fixer, ainsi qu'une paire de trous de passage pour deux tiges de support.

Conformément à une caractéristique essentielle de l'invention, ledit élément de support est doté d'un autre trou de passage, agencé perpendiculaire par rapport aux trous de passage des tiges, et qui débouche dans ladite rainure.

Pendant le montage du garde-boue, une vis autotaraudeuse est inserée dans ledit autre trou; le serrage de cette vis cause, en succession, le perçage du garde-boue, et donc sa fixation à l'élément de support, ainsi qu'une déformation de l'élément de support en matériau plastique, ce qui permet la fixation définitive des tiges audit élément de support.

Le montage du garde-boue a donc lieu tout simplement au moyen du vissage d'une vis autotaraudeuse qui sert, à la fois, à la fixation des tiges et du garde-boue à l'élement de support.

D'autres avantages et caractéristiques de l'invention ressortiront plus clairement de la description ci-dessous d'un mode de réalisation préférée donné à titre d'exemple non limitatif et représenté par le dessin annexé, dans lequel:

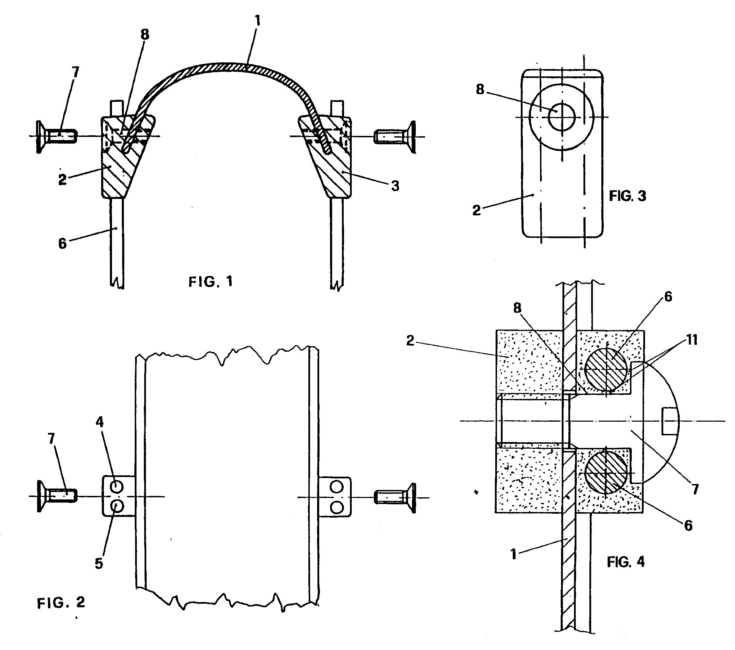

- la figure 1 est une coupe verticale illustrant le dispositif de montage d'un garde-boue de de bicyclette selon la présente invention;
- la figure 2 est une vue partielle en plan du dispositif selon la figure 1;
- la figure 3 est une vue en élévation d'un élément de support selon l'invention.
- la figure 4 est une vue en section du dispositif selon l'invention.

Dans les figures, les bords extérieurs d'un garde-boue 1 sont respectivement insérés à l'intérieur d'une rainure prévue dans un élément de support et fixation 2, 3 en matériau plastique ayant une conformation essentiellement trapezoïdale ou tronconique et qui présente une paire de trous 4, 5 de passage pour l'introduction de tiges 6 reliant le garde-boue 1 au moyeu de la roue.

De plus, chaque élément de support 2, 3 présente un autre trou 8 de passage, agencé essentiellement perpendiculaire par rapport auxdits trous 4, 5, et qui débouche dans ladite rainure en la traversant de part à part.

Ce trou 8 permet l'introduction d'une vis autotaraudeuse 7 laquelle s'engage dans le trou 8, débouche dans la rainure et traverse le garde-boue soit en le perçant elle-même, soit en traversant un trou ménagé au préalable dans le garde-boue.

Le serrage poursuivi de la vis 7 dans le trou cause ensuite une faible déformation de l'élément 2, 3, ce qui entraîne le verrouillage des tiges 6 dans les trous 4, 5 respectifs.

Par conséquent, une fixation efficace des tiges et du garde-boue à l'élément de support est assurée au moyen d'une unique vis autotaraudeuse.

## Revendications

1. Dispositif (2, 3) pour la fixation d'un garde-boue (1) de bicyclette aux tiges (6) radiales reliées à la fourche du cadre ou bien au moyeu de la roue de la bicyclette, ledit dispositif étant constitué d'un corps (2, 3) en matériau plastique ainsi que d'une rainure destinée à loger le bord dudit garde-boue (1), dispositif caractérisé en ce que ledit corps (2, 3) présente une paire de trous (4, 5) parallèles de passage desdites tiges (6) ainsi qu'un autre trou (8) essentiellement perpendiculaire à ladite paire de trous (4, 5) de passage desdites tiges (6), ledit autre trou (8) débouchant à l'intérieur de ladite rainure, une vis autotaraudeuse (7) étant introduite et vissée dans ledit autre trou (8) au but de fixer lesdites tiges (6) ainsi que ledit garde-boue (1) audit corps (2, 3).

2. Dispositif selon la revendication 1, combiné avec un garde-boue (1) caractérisé en ce que le bord dudit garde-boue (1) est doté d'un trou pour l'introduction de ladite vis autotaraudeuse (7).

3. Dispositif selon la revendication 1, caractérisé en ce que ladite vis autotaraudeuse (7) est susceptible de percer le bord dudit garde-boue (1) pendant l'action de vissage dans ledit autre trou (8).

## Claims

1. Device (2, 3) for fastening a bicycle mudguard (1) to the radial rods (6) connected to the frame fork or directly to the wheel-hub of a bicycle, said device being constituted by a plastic body (2, 3) and by a groove suitable to receive the rim of said mudguard (1), device characterized in that said body (2, 3) is provided with a pair of parallel holes (4, 5) for the passage of said rods (6) and with a further hole (8) essentially perpendicular to said pair of holes (4, 5) for the passage of said rods (6), said further hole (8) being joined to said groove, a thread forming screw (7) being introduced and screwed into said further hole (8) in order to fasten said rods (6) and said mudguard (1) to said body (2, 3).

2. Device according to claim 1, combined with a mudguard (1) characterized in that the rim of said mudguard (1) is provided with a hole for the introduction of said thread forming screw.

3. Device according to claim 1, characterized in that said thread forming screw (7) is suitable for drilling the rim of said mudguard (1) during the hole (8) screwing operation.

## Patentansprüche

1. Vorrichtung (2, 3) zur Befestigung eines Radschützers an den Radialstreben (6) der Gabel oder direkt an der Radnabe eines Fahrrads, wobei die Vorrichtung einen Körper (2, 3) aus Kunststoff und eine Rille zur Aufnahme des Rands des Radschützers (1) umfaßt, dadurch gekennzeichnet, daß, der Körper (2, 3) ein Paar parallel zueinander liegender Bohrungen (4, 5) zur Durchlass der Streben (6) und eine weitere Bohrung (8) umfaßt, wobei diese weitere Bohrung (8) wesentlich rechtwinklig zum Bohrungenpaar (4, 5) liegt und im Innern der Rille mündet, wobei eine selbstschneidende Schraube (7) in die weitere Bohrung (8) eingesetzt und eingeschraubt wird, um die Streben (6) und den Radschützer (1) an dem Körper (2, 3) zu befestigen.

2. Vorrichtung nach Anspruch 1, kombiniert mit einem Radschützer (1), dadurch gekennzeichnet, daß der Rand des Radschützers (1) mit einer Bohrung zum Einsetzen der selbstschneidenden Schraube versehen ist.

3. Vorrichtung nach Anspruch 1, dadurch gekennzeichnet, daß die selbstschneidende Schraube (7) den Rand des Radschützers (1) während des Einschraubsvorgangs in die weitere Bohrung (8) durchbohren kann.
